Europäisches Patentamt

European Patent Office

Office européen des brevets

(11) Publication number: **0 082 832**
**B1**

(12) **EUROPEAN PATENT SPECIFICATION**

(45) Date of publication of patent specification: **26.02.86**

(21) Application number: **82870075.7**

(22) Date of filing: **17.12.82**

(51) Int. Cl.⁴: **C 09 D 3/48**

(54) Radiation and heat curable compositions comprising isocyanuric acid-acrolein derivatives.

(30) Priority: **21.12.81 US 332900**
**21.12.81 US 332641**

(43) Date of publication of application:
**29.06.83 Bulletin 83/26**

(45) Publication of the grant of the patent:
**26.02.86 Bulletin 86/09**

(84) Designated Contracting States:
**BE DE FR GB IT**

(56) References cited:
**EP-A-0 055 090**

(73) Proprietor: **MONSANTO COMPANY**
**Patent Department 800 North Lindbergh**
**Boulevard**
**St. Louis, Missouri 63166 (US)**

(72) Inventor: **Cohen, Saul Mark**
**15 Lindsay Road**
**Springfield Massachusetts 01128 (US)**
Inventor: **Leblanc, John Roger**
**34 Decorie Drive**
**Wilbraham Massachusetts 01095 (US)**

(74) Representative: **McLean, Peter et al**
**Monsanto Europe S.A. Patent Department**
**Avenue de Tervuren 270-272 Letter Box No 1**
**B-1150 Brussels (BE)**

Courier Press, Leamington Spa, England.

## Description

Background of the invention

This invention relates to radiation- and heat-curable compositions containing polyunsaturated compounds and isocyanuric acid-acrolein derivatives and to a process of curing such compositions.

Polyunsaturated compounds containing activated unsaturated groups such as acrylic groups, polymerize readily when they are exposed to ultraviolet or ionizing radiation as well as when heated in the presence of free radical or ionic initiators. However such compounds are inhibited from polymerizing by air and cure is generally achieved under a nitrogen atmosphere or by using excessive amounts of radiation or activator or when heated require long reaction times or high curing temperatures. We have found that the addition of polyaldehyde adducts of isocyanuric acid and acrolein or the hemiacetals of the polyaldehyde adducts, allows cure to be accomplished more readily in the presence of air.

One aspect of our invention is directed to a radiation- or heat-curable coating composition comprising about 50 to about 90 parts by weight of an ester of an ethylenically unsaturated acid and a polyhydric alcohol, and about 10 to about 50 parts by weight of a polyaldehyde adduct formed from 1 mole of isocyanuric acid and from about 2 to about 3 moles of acrolein or a hemiacetal of the polyaldehyde adduct. When heat-cured, an effective amount of a free radical initiator is required. Another aspect of the invention is directed to a process of curing the composition by exposing it to an effective amount of polymerization-initiating radiation. Still another aspect of the invention is directed to a process of curing the composition by heating it to an effective temperature for initiation of the free-radical or ionic cure.

The polyunsaturated compounds of the compositions of the present invention are esters of an ethylenically unsaturated acid and a polyhydric alcohol. Advantageously the ethylenically unsaturated acid is selected from the group consisting of acrylic acid, methacrylic acid and itaconic acid and is preferably acrylic acid. Advantageously the polyhydric alcohol has a number average molecular weight of less than about 1000. Such polyhydric alcohols include hydrocarbyl polyols, ether polyols, ester polyols, amide polyols, urethane polyols, and cyclic nitrogen-containing polyols.

The hydrocarbyl polyols include ethylene glycol, 1,2 - propanediol; 1,3 - propanediol; 1,2 - butanediol; 1,3 - butanediol; 1,4 - butanediol; 2,3 - butanediol; 1,6 - hexanediol; 2,4 - pentanediol; 1,5 - pentanediol; 2,5 - hexanediol; 2 - methyl - 1,3 - pentanediol; 2 - methyl - 2,4 - pentanediol; 2,4 - heptanediol; 2 - ethyl - 1,3 - hexanediol; 2,2 - dimethyl - 1,3 - propanediol; 1,2 - cyclohexanediol; 1,4 - cyclohexanediol; 1,4 - bis(hydroxymethyl)cyclohexane; 2,2 - diethyl - propanediol - 1,3; 2,2 - diethyl-butanediol - 1,3; butene - 2 - diol - 1,4; trimethylolpropane; trimethylolethane; glycerol; 1,2,4 - butanetriol; 1,2,6 - hexanetriol; erythritol, D-threitol; L-threitol; sorbitol and D-mannitol.

The ether polyols include polyalkylene glycols such as diethylene glycol, triethylene glycol, dipropylene glycol, diglycerol, poly(tetramethylene ether)glycols, 2,2 - bis(hydroxyethoxyphenyl)propane, 2,2 - bis(hydroxy-propoxyphenyl)propane, polyols formed by hydrolysis of the glycidyl groups of epoxy resins, and ether polyols formed by addition of alkylene oxide, such as ethylene oxide and propylene oxide to any of the above-described hydrocarbyl polyols.

The ester polyols include esterification products obtained by esterification of any of the above-described hydrocarbyl polyols and other polyols with polycarboxylic acids such as phthalic, isophthalic, terephthalic, trimellitic, pyromellitic, tetrahydrophthalic, hexahydrophthalic, adipic, azelaic, sebacic, malic, glutaric, chlorendic, tetrachlorophthalic, maleic, fumaric, itaconic, malonic, pimelic, suberic, 2-methyl-succinic, 2,3 - dimethylsuccinic, 3,3 - diethyl-glutaric, 3,3 - dimethylglutaric, 2,2 - dimethylglutaric, 2,2 - dimethylsuccinic and the like. Anhydrides of these acids, where they exist, can also be employed and are encompassed by the term "dicarboxylic acid". Finally, certain materials which react in a manner similar to acids to form polyester polyols are also useful. Such materials include lactones such as caprolactone, propiolactone, and methyl caprolactone, and hydroxy acids such as tartaric acid. If a triol or higher alcohol is used, some monocarboxylic acid, such as acetic acid, may be used with the polycarboxylic acid to form the polyester polyol oligomer, and for some purposes, such a composition would be highly desirable.

The amide polyol oligomers useful in the instant invention are produced from any of the above-described polyacids or lactones and diols, triols and higher alcohols, and small amounts of diamines or aminoalcohols. Suitable diamines and aminoalcohols include hexamethylene diamine, ethylene diamine, monoethanolamine, phenylenediamines, toluene-diamines, diethanolamines and the like.

The polyurethane polyol oligomers useful in the instant invention are produced by reacting any of the above-described polyols, including diols, triols and higher alcohols, ether-containing polyols, polyester polyol oligomers and polyester ether polyol oligomers as herein before described with an organic polyisocyanate.

The polyisocyanate which is reacted with the polyol can be essentially any organic polyisocyanate, e.g., hydrocarbon polyisocyanates or substituted hydrocarbon polyisocyanates. Many such organic polyisocyanates are known in the art, including p-phenylene diisocyanate, biphenyl diisocyanate, toluene diisocyanate, 3,3' - dimethyl - 4,4' - diphenylene diisocyanate, 1,4 - tetramethylene diisocyanate, hexamethylene diisocyanate, 2,2,4 - trimethylhexane - 1,6 - diisocyanate, methylene - bis(phenylisocyanate), lysine methyl ester diisocyanate and methylcyclohexyl diisocyanate.

While diisocyanates are preferred, higher polyisocyanates can be utilized as part of the organic polyisocyanate. Examples are 1,2,4 - benzene triisocyanate and polymethylene polyphenyl isocyanate.

It is preferred to employ an aliphatic diisocyanate, since it has been found that these provide better color stability in the finished coating. Examples include bis(isocyanatocyclohexyl)methane, 1,4 - butylene diisocyanate, methylcyclohexyl diisocyanate, and isophorone diisocyanate.

The conditions of the reaction between the polyol and the polyisocyanate are chosen so as to produce an hydroxyl-containing urethane reaction product of low molecular weight, i.e., a polyurethane polyol oligomer. In general, this is accomplished by utilizing an equivalent ratio of isocyanate groups to hydroxyl groups of less than about one, and allowing substantially all the isocyanate groups present to react.

Suitable cyclic nitrogen-containing polyols include such compounds as tris(hydroxyethyl)isocyanurate (THEIC); N,N' - bis(hydroxyethyl)dimethyl hydantoin (BHDH); 1,4 - bis[4,4 - bis(hydroxymethyl) - 1,3 - oxazol - 2 - ene - 2 - yl]butane; hydroxylated THEIC; hydroxyalkylated BHDH; bis(hydroxyethyl)ethylene urea; 4,4 - bis(hydroxymethyl) - 1,3 - oxazolidin - 2 - one; hexamethylolmelamine and hexamethylolmelamine partly etherified with a $C_1$ to $C_6$ monohydric alcohol and hexamethylolmelamine etherified with a $C_1$ to $C_6$ monohydric alcohol and a dihydric alcohol such as ethylene glycol or propylene glycol.

The cyclic nitrogen-containing polyols may be used by themselves or they may be reacted with any of the above-described acids to form ester groups or with any of the above-described polyisocyanates to form urethane groups.

The polyunsaturated compounds are prepared by conventional means by interaction of the ethylenically unsaturated acid, or its anhydride, or acid halide or ester with the polyhydric alcohol or derivative thereof or by interaction of a hydroxyester such as a 2-hydroxyethyl ester of the ethylenically unsaturated acid with a polyisocyanate, a polyacid or an alkoxymethylmelamine. On average at least about two ethylenically unsaturated acid moieties are attached to the polyhydric alcohol moiety.

The polyaldehyde adducts of isocyanuric acid and acrolein are obtained by adding on average at least about 2 moles of acrolein to one mole of isocyanuric acid. Such adducts, and their method of preparation are described in copending European Patent Application No. 81305944.1 (Pubn. No. 55090). They comprise monomeric bis(3 - oxopropyl)isocyanurate and tris(3 - oxopropyl)isocyanurate and oligomers thereof. They may be conveniently used as such or in the form of their hemiacetals prepared by interaction with monohydric alcohols, preferably the lower boiling $C_1$ to $C_8$ alcohols, as described in the above cited copending application.

The weight ratio of polyunsaturated compound to adduct of isocyanuric acid and acrolein or hemiacetal thereof is advantageously in the range of about 1:1 to about 9:1 and is preferably in the range of 7:3 to about 8.5:1.

The compositions of the present invention can advantageously include vinyl monomers, the preferred vinyl monomers being styrene, acrylonitrile, vinyl pyrrolidone, acrylic acid, methacrylic acid and esters of $C_1$—$C_8$ monohydric alcohols and acrylic or methacrylic acid such as methyl acrylate, butyl acrylate, butyl methacrylate, octyl acrylate and 2-ethylhexyl methacrylate. The amount of such monomer is preferably in the range of 10 to about 100 parts by weight per 100 parts by weight of polyunsaturated compound and polyaldehyde derivative of isocyanuric acid and acrolein.

While the novel composition of this invention may photopolymerize at satisfactory rates in the absence of photoinitiating additives, their photocuring rates can be increased by the addition thereto of a photoinitiator. Examples of suitable photoinitiators include the following: acyloin or an acyloin derivative, such as benzoin, benzoin methyl ether, benzoin ethyl ether, decyl bromide, decyl chloride, decylamine, and the like: and halogenated aliphatic, alicyclic and aromatic hydrocarbons and their mixtures in which the halogen atoms are attached to the carbon chain in the aliphatic compounds and are attached directly to the ring structure in the aromatic and alicyclic compounds, that is, the halogen is bonded directly to the aromatic or alicyclic hydrocarbon nucleus. The halogen may be chlorine, bromine, fluorine, or iodine. Examples of such photoinitiators include polychlorinated polyphenyl resins, such as those sold under the Trade Mark Aroclor (Monsanto Company) which in general are polychlorinated diphenyls, polychlorinated triphenyls, and mixtures of polychlorinated diphenyls and polychlorinated triphenyls; polyfluorinated phenyls (E.I. DuPont de Nemours & Co.); chlorinated rubbers, such as those sold under the Trade Mark Parlon (Hercules Powder Company); copolymers of vinyl chloride and vinyl isobutyl ether, such as those sold under the Trade Mark Vinoflex MP-400 (BASF—Wyandotte Inc.); chlorinated aliphatic waxes, such as that sold under the Trade Mark Chlorowax 70 (Diamond Alkali, Inc.); perchloropentacyclodecane, such as that sold under the Trade Mark) Dechlorane—(Hooker Chemical Co.); chlorinated paraffins, such as that sold under the Trade Mark Clorafin 40 (Hooker Chemical Co.) and that sold under the Trade Mark Unichlor-70B (Neville Chemical Co.); mono- and polychlorobenzenes; mono- and polybromobenzenes; mono- and polychloroxylenes; mono- and polybromo- xylenes; dichloromaleic anhydride; 1 - (chloromethyl) naphthalene; 2,4 - dimethylbenzene sulfonyl chloride; 1 - bromo - 3 - (m - phenoxy-phenoxy benzene); 2 - bromomethyl methyl ether; chlorendic anhydride; and the like; and mixtures thereof.

These sensitizers or photoinitiators are used in amounts ranging from about 0.1 to about 50 per cent, and preferably from about 2 to about 25 percent, of the weight of the total composition.

Irradiation of the coating compositions of the invention can be accomplished by any one or a combination of a variety of methods. The compounds may be exposed for example, to actinic light from any source and of any type as long as it furnishes an effective amount of ultraviolet radiation, since the compounds of this invention activatable by actinic light generally exhibit their maximum sensitivity in the range of about 180 nm 1,800 A.), 3 to 400 nm (30 to 4,000 A.), and preferably about 200—300 nm (2,000 A. to 3,000 A.); electron beams; gamma radiation emitters, and the like; and combinations of these. Suitable sources include carbon arcs, mercury-vapor arcs, fluorescent lamps with special ultraviolet-light emitting phosphors, argon glow lamps, photographic flood lamps, Van der Graaff accelerators, resonant transformers, Betatrons, linear accelerators, and so forth.

The time of irradiation is not critical but must be sufficient to give the effective dosage. Irradiation may be carried out at any convenient temperature, and most suitably at room temperature for economic reasons. Distances of the radiation source from the work may range from about 0.32 cm. (one-eighth inch) to 25.4 cm (10 inches), and preferably from about 0.32 cm (one-eighth inch) to 12.7 cm (5 inches).

The initiators for the heat-cure of the compositions may be any of the conventional free-radical or ionic initiators selected to provide compositions which are stable at room temperature but to initiate cure at temperatures in the range of about 55 to about 120°C. The free-radical initiators advantageously have a ten-hour half life in the temperature range of about 35 to about 90°C. Such initiators include isopropyl peroxide, bis(4 - t - butylcyclohexyl)peroxycarbonate, lauroyl peroxide and benzoyl peroxide. The ionic initiators are selected advantageously from the moderately active Lewis acid catalysts which are soluble in organic coating systems, for example boron trifluoride etherate, zinc chloride and stannic chloride. The amount of initiator used in the coating compositions is an amount effective for thermal cure preferably at a temperature in the range of about 55 to about 120°C. and is advantageously in the range of 0.01 to about 5 parts by weight per 100 parts by weight of the polyunsaturated component of the coating composition.

When the initiator is a free-radical initiator, from about 0.01 to about 0.5 equivalents of chain transfer agent per equivalent of free-radical initiator may be included in the coating composition to modify the cure response of the composition.

The compounds of the present invention are suitable for use, in the absence of solvents and in the presence of oxygen, as vehicles for paints, lacquers and printing inks which are capable of setting or hardening after printing by exposure to radiation or heat. They are suitable also as compositions and elements for the preparation of photographic images, printing plates, and rolls; as adhesives for foils, films, papers, fabrics, and the like; and as coatings for metals, plastics, paper, wood, foils, textiles, glass, cardboard, box board, and the like.

When the photopolymerizable compounds of the present invention are used as adhesives with lamina, at least one of the lamina must be translucent when ultraviolet light is used. When the radiation source is an electron beam or gamma radiation, at least one of the lamina must be capable of transmitting high energy electrons or gamma radiation, respectively, and neither is necessarily translucent to light. Typical laminations include polymer-coated cellophane to polymer-coated cellophane films, polymer-coated cellophane to polypropylene, Mylar (Trade Mark) to a metal substrate such as aluminum or copper, polypropylene to aluminum, and the like.

Various dyestuffs, pigments, plasticizers, lubricants, stabilizers, flow control agents, levelling agents and other modifiers may be incorporated in the coating compositions to obtain certain desired characteristics in the finished products. The coatings may be applied by any conventional technique such as spraying, roll coating, dip coating, flow coating etc., to an average depth in the range of about 2.54 μm to 101.6 μm. (0.1 to about 4 mils).

The following examples are set forth in illustration of the invention and should not be construed as limitations thereof. Parts and percentages are by weight unless otherwise indicated.

Example 1

A solid polyaldehyde adduct was obtained by the addition of three moles of acrolein to one mole of isocyanuric acid under mildly acid conditions. The polyaldehyde had an equivalent weight of 99 and contained one aldehyde group per equivalent when it was analyzed by the conventional hydroxylamine method. It was comprised substantially of tris(3 - oxopropyl)isocyanurate. The solid (25.6 parts by weight) was fused to a viscous liquid at 100°C. and was mixed with ethylene glycol monomethyl ether (6.6 parts) to form the hemiacetal, a liquid at room temperature. 47.5 parts of 1,6 - hexanediol diacrylate and 17.5 parts of the reaction product of 1 mole bisphenol A diglycidyl ether and 2 moles acrylic acid were mixed with the hemiacetal, followed by 0.9 parts of a commercial flow control agent sold by the 3M Company under the tradename FC-430, and 2.0 parts of benzoin ethyl ether. The coating composition was stored in the dark. The coating composition was applied to primed steel test panels by means of a drawn-down blade to give coatings of about 13 µm in thickness. The coated panels were run through a UV Processor Model Number QC1202AN supplied by Radiation Polymer Co., Plainsfield, Ill, equipped with two 1200-watt mercury vapor lamps at a height of 10 cms (four inches) above the panels. The belt speed of the UV Processor was 30 feet per minute (9.15 m per minute). The cured coatings were clear and glossy, and possessed a pencil hardness of 2H and a forward impact strength of 28 in-lb. (3.16 J). The coatings had good solvent and humidity resistance.

Example 2

Example 1 was repeated without the tris(3 - oxopropyl) - isocyanurate composition. The coating composition containing 71 parts by weight 1,6-hexanediol diacrylate, 26 parts by weight of the reaction product of 1 mole of bisphenol A diglycidyl ether and 2 moles acrylic acid, 0.6 parts by weight of flow-control agent FC-430 and 2.0 parts by weight of benzoin ethyl ether was exposed to UV radiation under the same conditions as set forth in Example 1. The coating composition remained uncured.

Example 3

18.7 parts by weight of the tris(3 - oxopropyl)isocyanurate composition of Example 1 was fused at 100°C and mixed with 14.0 parts by weight of acrylic acid. The mixture was cooled to room temperature and 46.7 parts of the reaction product of 1 mole of bisphenol A diglycidyl ether and 2 moles acrylic acid, 18.7 parts of butyl acrylate and 1.9 parts of benzoin ethyl ether were added and mixed thoroughly to provide a coating composition. The coating composition was stored in the dark. Coatings of 50 µm dry thickness were applied to test panels. They were exposed to UV radiation under the conditions set forth in Example 1. The coatings developed a pencil hardness of 2H, good solvent resistance and a forward impact strength of 50 in-lb. (5.65 J).

Example 4

In this example trimethylolpropane triacrylate was substituted for the tris(3 - oxopropyl)isocyanurate composition in the coating composition of Example 3. The coating composition contained 13.4 parts by weight of acrylic acid, 22.3 parts by weight of trimethylolpropane triacrylate, 44.6 parts of the reaction product of 1 mole of bisphenol A diglycidyl ether and 2 moles of acrylic acid, 17.9 parts of butyl acrylate and 1.8 parts of benzoin ethyl ether. The coating compositions were applied to test panels and exposed to UV radiation in the fashion of Example 3. Coatings of 30 µm, possessing a pencil hardness of F, good solvent resistance and a forward impact strength of 15 in-lbs. (1.70 J), were obtained.

Example 5

A coating composition was prepared by the method of Example 1 with 25.6 parts by weight of the tris (3 - oxo - propyl)isocyanurate composition, 6.6 parts of ethylene glycol monomethyl ether, 47.5 parts tetraethylene glycol diacrylate, 17.5 parts of the reaction product of 1 mole bisphenol A diglycidyl ether and 2 moles acrylic acid, 0.9 parts of flow control agent FC-430 and 2 parts of benzoin ethyl ether. The coating composition was applied to test panels to provide coatings of 30 µm dry thickness. The coatings were cured by the exposure to UV radiation under the conditions set forth in Example 1. The cured coatings possessed a pencil hardness of 2H, good solvent resistance and a forward impact strength of 80 in-lbs. (9.04 J).

Example 6

A composition was prepared by the method of Example 1 with 19.1 parts by weight of the tris(3 - oxopropyl)isocyanurate composition, 14.3 parts of acrylic acid, 47.6 parts of the reaction product of 1 mole bisphenol A diglycidyl ether and 2 moles acrylic acid and 19.1 parts of butyl acrylate. The composition was exposed to an electron beam dosage of 5.0 megarads and a solid product which was insoluble in methyl ethyl ketone was obtained.

Example 7

A solid polyaldehyde adduct was obtained by the addition of three moles of acrolein to one mole of isocyanuric acid under mildly acid conditions. The polyaldehyde had an equivalent weight of 99 and contained one aldehyde group per equivalent when it was analyzed by the conventional hydroxylamine method. It was comprised substantially of tris(3 - oxopropyl)isocyanurate. The solid (22.2 parts by weight) was fused to a viscous liquid at 100°C. and was mixed with ethylene glycol monomethyl ether (5.7 parts) to form the hemiacetal, a liquid at room temperature. 41.4 parts of 1,6 - hexanediol diacrylate was mixed with the hemiacetal, followed by 0.4 parts of a commercial flow control agent sold by the 3M Company under the tradename FC-430, and 1.4 parts of bis(4 - t - butylcyclohexyl)peroxydicarbonate in 14.1 parts of acetone. The coating composition was applied to cathodic, EDP primed test panels by means of a draw-down blade to give coatings of about 50 µm in thickness. The coatings were cured for 30 minutes at 82°C. They were clear and glossy; their pencil hardness was 2H; they survived 200 MEK rubs and possessed good humidity resistance, UV durability and salt-fog resistance.

When the tris(3 - oxopropyl) isocyanurate component was omitted from the composition, cure of the coating composition after 30 minutes at 82°C was insufficient to provide a solvent-resistant coating.

Example 8

The tris(3 - oxopropyl)isocyanurate composition of Example 7 (21.6 parts by weight) was reacted with 4.3 parts by weight of 1-propanol and the liquid hemiacetal was mixed with 50.3 parts of 1,6-hexanediol diacrylate, 1.08 parts of bis(4 - t - butylcyclohexyl)peroxydicarbonate, 0.14 parts of zinc chloride, 12.9 parts of methanol, and 9.7 parts of cyclohexanone. The coating composition was applied to test panels to give films of about 50 μm dry thickness. The coatings were heated at 71°C for 30 minutes. They developed a pencil hardness of 2H, and good solvent resistance.

When the tris(3 - oxopropyl)isocyanurate component was omitted from the composition, cure for 30 minutes at 71°C was insufficient to provide a solvent-resistant coating.

Example 9

16.7 parts by weight of the tris(3 - oxopropyl)isocyanurate composition of Example 7 was mixed with 66.7 parts of triethyleneglycol diacrylate, 0.83 parts of zinc chloride, 7.5 parts of methanol and 8.3 parts of acetone to provide a liquid coating composition. The composition was coated on test panels to provide a coating thickness of 30 μm dry thickness. After 30 minutes at 107°C, the coatings possessed a 4H hardness and good solvent resistance.

Example 10

16.3 parts by weight of the tris(3 - oxopropyl)isocyanurate composition of Example 7 was mixed with 12.2 parts of acrylic acid, 40.7 parts of the reaction product of 1 mole bisphenol A diglycidyl ether and 2 moles acrylic acid, 26 parts of butyl acrylate, 0.2 parts of flow control agent FC-430, 2.4 parts of bis(4 - t - butylcyclohexyl)peroxydicarbonate and 2.2 parts of methyl ethyl ketone to provide a liquid coating composition. The composition was coated on test panels to provide a dry thickness of 30 μm. The coatings were cured for 30 minutes at 82°C to develop a pencil hardness of 4H and good solvent resistance.

When the tris(3 - oxopropyl)isocyanurate was replaced with trimethylolpropane triacrylate, the coatings required 30 minutes at 107°C to develop equivalent properties.

Example 11

A coating composition was prepared by blending 22.7 parts by weight of the tris(3 - oxopropyl)isocyanurate composition of Example 7 with 51.5 parts of an acrylyl-terminated urethane sold by Thiokol Composition under the tradename Uvithane, 0.2 parts of flow-control agent FC-430, 2.9 parts of benzoyl peroxide and 22.7 parts of tetrahydrofuran. The coating composition was applied to test panels and cured at 107°C for 30 minutes to give coatings with good solvent resistance.

Similar results were obtained with 2.9 parts of boron trifluoride ethyl etherate in place of benzoyl peroxide.

**Claims**

1. A curable coating composition comprising 50 to 90 parts by weight of an ester of an ethylenically unsaturated acid and a polyhydric alcohol, and 10 to 50 parts by weight of a polyaldehyde adduct formed from 1 mole of isocyanuric acid and from 2 to 3 moles of acrolein or a hemiacetal of the polyaldehyde adduct.

2. A composition of Claim 1, comprising additionally an initiator.

3. A composition of Claim 1, comprising additionally from 0.1 to 50 parts by weight of a photoinitiator.

4. A composition of Claim 2, wherein the initiator is a free-radical initiator and the amount of the initiator is from 0.01 to 5.0 parts by weight per 100 parts of the ester.

5. A composition of either Claim 2 or Claim 4, wherein the initiator is a free-radical initiator and the composition comprises additionally from about 0.01 to about 0.5 equivalents of a chain transfer agent per equivalent of free-radical initiator.

6. A composition of any of the preceding claims, wherein the ethylenically unsaturated acid is selected from acrylic acid, methacrylic acid and itaconic acid.

7. A composition of any of the preceding claims, wherein the polyhydric alcohol has a number average molecular weight of 1000 or less.

8. A process of curing a composition of any of Claims 1, 2, 3, 6 and 7, which comprises exposing the composition to radiation.

9. A process of curing a composition of Claim 2, which comprises exposing the composition to actinic radiation.

10. A process of curing a composition of Claim 2, which comprises heating the composition to effect initiation of the cure.

**Patentansprüche**

1. Härtbare Beschichtungsmasse enthaltend 50 bis 90 Gew.-Teile eines Esters aus einer ethylenisch ungesättigten Säure und einem mehrwertigen Alkohol und 10 bis 50 Gew.-Teile eines aus 1 Mol Isocyanursäure und 2 bis 3 Mol Acrolein gebildetes Polyaldehyd-Addukt oder eines Halbacetals des Polyaldehyd-Addukts.

2. Masse nach Anspruch 1, dadurch gekennzeichnet, daß sie zusätzlich einen Initiator enthält.

3. Masse nach Anspruch 1, dadurch gekennzeichnet, daß sie zusätzlich 0,1 bis 50 Gew.-Teile eines Photoinitiators enthält.

4. Masse nach Anspruch 2, dadurch gekennzeichnet, daß der Initiator ein freie Radikale bildender Initiator ist und die Menge des Initiators 0,01 bis 5,0 Gew.-Teile pro 100 Teile des Esters beträgt.

5. Masse nach Anspruch 2 oder 4, dadurch gekennzeichnet, daß der Initiator ein freie Radikale bildender Initiator ist und die Masse zusätzlich etwa 0,01 bis etwa 0,5 Äquivalente eines Kettenübertragungsmittels pro Äquivalent des freie Radikale bildenden Initiators enthält.

6. Masse nach einem der vorhergehenden Ansprüche, dadurch gekennzeichnet, daß die ethylenisch ungesättigte Säure aus Acrylsäure, Methacrylsäure und Itaconsäure ausgewählt ist.

7. Masse nach einem der vorhergehenden Ansprüche, dadurch gekennzeichnet, daß der mehrwertige Alkohol ein zahlenmittleres Molekulargewicht von 1000 oder weniger aufweist.

8. Verfahren zur Härtung einer Masse nach einem der Ansprüche 1, 2, 3, 6 und 7, dadurch gekennzeichnet, daß man die Masse einer Strahlung aussetzt.

9. Verfahren zur Härtung einer Masse nach Anspruch 2, dadurch gekennzeichnet, daß man die Masse aktinischer Strahlung aussetzt.

10. Verfahren zur Härtung einer Masse nach Anspruch 2, dadurch gekennzeichnet, daß man die Masse zur Einleitung der Härtung erwärmt.

**Revendications**

1. Composition de revêtement durcissable comprenant de 50 à 90 parties en poids d'un ester d'un acide éthyléniquement insaturé et d'un polyol, et de 10 à 50 parties en poids d'un produit d'addition polyaldéhyde formé à partir d'un mole d'acide isocyanurique et de 2 à 3 moles d'acroléine ou d'un hémiacétal du produit d'addition polyaldéhyde.

2. Composition selon la revendication 1, comprenant en plus un initiateur.

3. Composition selon la revendication 1, comprenant en plus de 0,1 à 50 parties en poids d'un photoinitiateur.

4. Composition selon la revendication 2, dans laquelle l'initiateur est un initiateur de radicaux libres et la quantité d'initiateur est comprise entre 0,01 et 5,0 parties en poids pour 100 parties de l'ester.

5. Composition selon la revendication 2 ou la revendication 4, dans laquelle l'initiateur est un initiateur de radicaux libres et la composition comprend, en plus, d'environ 0,01 à environ 0,5 équivalent d'un agent de transfert de chaîne par équivalent d'initiateur de radicaux libres.

6. Composition selon l'une quelconque des revendications précédentes, dans laquelle l'acide éthyléniquement insaturé est choisi parmi l'acide acrylique, l'acide méthacrylique et l'acide itaconique.

7. Composition selon l'une quelconque des revendications précédentes, dans laquelle le polyol présente une masse molaire moyenne de 1000 ou moins.

8. Procédé de durcissement d'une composition selon l'une quelconque des revendications 1, 2, 3, 6 et 7, comprenant l'exposition de la composition à un rayonnement.

9. Procédé de durcissement d'une composition selon la revendication 2, comprenant l'exposition de la composition à un rayonnement actinique.

10. Procédé de durcissement d'une composition selon la revendication 2, comprenant le chauffage de la composition pour initier le durcissement.